# EUROPEAN PATENT APPLICATION

(11) **EP 4 700 335 A1**
(43) Date of publication of application: **25.02.2026**
(21) Application number: 24792502.7
(22) Date of filing: 03.04.2024
(51) Int. Cl.: G01D 5/245

(54) **ROTATION DETECTION DEVICE**

(30) Priority: 18.04.2023 JP 2023067639
(71) Applicant: Oriental Motor Co., Ltd., Tokyo 111-0056 (JP); Ozeki, Sakao, Kakegawa-shi, Shizuoka, 436-0061 (JP)
(72) Inventor: HOUDA, Akihiko, Tsukuba-shi, Ibaraki 300-2635 (JP); SOMEYA, Masayuki, Tsukuba-shi, Ibaraki 300-2635 (JP); OZEKI, Sakao, Kakegawa-shi, Shizuoka 436-0061 (JP)
(74) Representative: Witte, Weller & Partner Patentanwälte mbB
(86) International application number: PCT/JP2024/013724
(87) International publication number: WO 2024/219226

(57) **Abstract**

A rotation detection device includes a ring-shaped multi-pole magnet provided on a rotation shaft, and a power generation sensor to detect a magnetic field which changes according to rotation of the multi-pole magnet. The power generation sensor includes a magnetic wire configured to exhibit a large Barkhausen effect, a coil wound around the magnetic wire, and a pair of magnetic flux conducting pieces made of magnetically-soft components respectively magnetically coupled to both end portions of the magnetic wire. The ring-shaped multi-pole magnet has a magnetization pattern on an outer circumferential portion, the magnetization pattern being inclined with respect to the rotation shaft. The power generation sensor faces the magnetization pattern of the multi-pole magnet in a posture in which an axial direction of the magnetic wire is parallel to the rotation shaft.

## Description

### RELATED APPLICATION

This application claims the benefit of priority to Japanese Patent Application No. 2023-67639, filed on April 18, 2023, the disclosure of which is entirely incorporated herein by reference.

### TECHNICAL FIELD

The present invention relates to a rotation detection device using a power generation sensor.

### BACKGROUND ART

Magnetic wires having a large Barkhausen effect (large Barkhausen jump) are known in the name of Wiegand wire or pulse wire. Such a magnetic wire includes a core portion, and a shell portion provided around the core portion. One of the core portion and the shell portion is a soft (magnetically soft) layer in which its magnetization direction is reversed even by application of a weak magnetic field, and the other of the core portion and the shell portion is a hard (magnetically hard) layer in which its magnetization direction is reversed only by application of a strong magnetic field. A power generation sensor is produced by winding a coil around the magnetic wire.

When the hard layer and the soft layer are magnetized in the same direction axially of the wire and the strength of an external magnetic field applied in a direction opposite to that magnetization direction is increased to a certain magnetic field strength, the magnetization direction of the soft layer is reversed. The reversal of the magnetization direction starts at a certain position of the magnetic wire to propagate to the entire wire, whereby the magnetization direction of the soft layer is totally reversed. At this time, the large Barkhausen effect is exhibited to induce a pulse signal in the coil wound around the magnetic wire. When the external magnetic field strength is further increased to another certain magnetic field strength, the magnetization direction of the hard layer is reversed.

The magnetic field strength at which the magnetization direction of the soft layer is reversed is herein referred to as "operational magnetic field" and the magnetic field strength at which the magnetization direction of the hard layer is reversed is herein referred to as "stabilization magnetic field."

A voltage output from the coil is characteristically constant irrespective of the change rate of an input magnetic field (external magnetic field), and is free from chattering because of the hysteresis with respect to the input magnetic field. For this reason, the pulse signal output from the coil is used for a rotation detection device and the like. Since the output from the coil involves electric power, a sensor of power generation type (power generation sensor) that does not require the supply of external electric power can be provided. That is, a peripheral circuit can also be operated by output energy of the coil without supplying external electric power.

In order to provide the large Barkhausen effect, it is necessary to reverse the magnetization direction of only the soft layer in a state such that the magnetization directions of the hard layer and the soft layer are consistent. Even if the magnetization direction of only the soft layer is reversed in a state such that the magnetization directions of the hard layer and the soft layer are inconsistent, no pulse signal is generated or a pulse signal having a very small amplitude is generated.

In order to maximize the available electric power, it is important that the reversal of the magnetization direction of the soft layer propagates to the entire magnetic wire from a state such that the magnetization direction of the magnetic wire is entirely consistent. If the magnetization direction of the magnetic wire is partly inconsistent, a pulse signal having a very small amplitude is generated. Therefore, it is preferred to apply a uniform magnetic field to the entire magnetic wire.

In a case where an alternating magnetic field is applied to the power generation sensor, a total of two pulse signals of one positive pulse signal and one negative pulse signal are generated in one cycle. By using a magnet as a generation source of the magnetic field, applying an alternating magnetic field to the power generation sensor by a rotational movement of the magnet, and counting generated pulse signals, a rotation position can be detected.

Examples of a device that detects a change in a magnetic field due to a rotation of a magnet using a magnetic wire exhibiting a large Barkhausen jump are described in PTL 1 and PTL 2.

PTL 1 discloses a rotation speed detection device that includes a sensor including a tone wheel which is magnetized with multi-poles and a magnetic wire which exhibits a large Barkhausen jump. In an arrangement shown in FIG. 1 of PTL 1, a magnetic wire is placed on an outer circumferential portion of a tone wheel when a wire length direction of the magnetic wire is set as a radius direction of a rotation axis of the tone wheel. One end of the magnetic wire is placed close to the outer circumferential surface of the tone wheel, and one end of a ferromagnetic pole piece is coupled to the other end of the magnetic wire. In addition, the other end of the pole piece is placed close to the outer circumferential surface of the tone wheel. With this arrangement, it is explained that the pole piece induces a magnetic field from the tone wheel and a predetermined magnetic field strength required to exhibit a large Barkhausen jump can be adjusted.

In an arrangement shown in FIG. 2 of PTL 1, a magnetic wire is placed on an outer circumferential portion of a tone wheel when a wire length direction of the magnetic wire is set to be parallel to a tangential direction of a circumference of a rotation axis of the tone wheel. The magnetic wire includes ferromagnetic pole pieces at both ends, and the pole piece induces a magnetic field from the tone wheel. Accordingly, it is explained that the predetermined magnetic field strength required to exhibit a large Barkhausen jump can be adjusted.

In arrangements shown in FIG. 3 to FIG. 10 of PTL 1, the magnetic wire is placed on the outer circumferential portion of the tone wheel when a wire length direction of the magnetic wire is set to be parallel to a rotation axis of the tone wheel. The magnetic wire is not provided with a pole piece. With respect to such placement of the magnetic wire, it is explained that a magnetic field having a predetermined strength required to exhibit a large Barkhausen jump is applied in various forms of the tone wheel illustrated in FIGS. 3, 5, 8, and 10 of PTL 1.

It is essential that the pole piece illustrated in FIG. 1 and FIG. 2 of PTL 1 has a shape corresponding to a pitch in a magnetization direction. As a result, assembly of the device is complicated, and performance of the device depends on the assembly accuracy. In addition, in an arrangement shown in FIG. 1 of PTL 1, the magnetic field strength is not uniform between one end of the magnetic wire directly opposing the tone wheel and the other end of the magnetic wire from which the magnetic field is induced through the pole piece. In an arrangement shown in FIG. 2 of PTL 1, an area of the pole piece facing the tone wheel is small. For this reason, any of these arrangements is not sufficiently effective as means for applying a uniform operational magnetic field and a uniform stabilization magnetic field to the entire magnetic wire.

In a state where there is no pole piece in PTL 1, as illustrated in FIGS. 4, 7, and 9 of PTL 1, magnetic flux lines leaking from the magnet are not parallel to the wire length direction of the magnetic wire. Therefore, in order to make the magnetic flux lines parallel to the wire length direction of the magnetic wire, various forms as illustrated in FIGS. 3, 5, 8, and 10 of PTL 1 are required. As a result, as compared with the arrangement of FIG. 11 and FIG. 12 of PTL 1, even in a case where the number of poles arranged in a circumferential direction is the same (that is, the detection resolution is the same), the number of magnetic poles provided on the outer circumferential portion of the tone wheel needs to be doubled or quadrupled. Therefore, there is a problem that a magnetic pole pattern needs to be complicated.

Such a magnetic pole pattern can be implemented by attaching magnetized magnets to a cylindrical yoke, but it takes many steps to attach the magnets. In general, it is possible to reduce the number of steps by performing multi-pole magnetization on a magnet having a cylindrical ring shape instead of attaching magnets, but it is very difficult to implement such a complicated magnetic pole pattern by magnetization. The magnetization cannot be performed, or even in a case where the magnetization can be performed, a magnetization yoke used for the magnetization is complicated and expensive.

In addition, unless a width of the magnetization pitch (a width of the magnetic pole in the circumferential direction) is increased, a stabilization magnetic field having a certain strength cannot be applied to the magnetic wire. Therefore, there is a problem that the device becomes large.

PTL 2 discloses a rotation detection device including a magnetic sensor in which a coil is wound around a magnetic wire exhibiting a large Barkhausen jump. The magnetic sensor is placed on an outer circumferential side of a track of a magnetic field defining portion such that the wire length direction of the magnetic wire is parallel to the axial direction of the rotation shaft. The magnetic field defining portion includes two permanent magnets having four poles in the circumferential direction. These two permanent magnets are provided on the rotation shaft such that different poles are arranged in the axial direction of the rotation shaft. With this arrangement, it is explained that the device can be downsized.

The structure of PTL 2 is similar to the structure of FIG. 6 of PTL 1, and two magnetic field defining portions (permanent magnets) are placed to be separated from each other in the axial direction of the rotation shaft to provide an unmagnetized portion (a portion without a magnetic pole). However, since it is necessary to mount the two components (permanent magnets), assembly of the device is complicated. In addition, phase matching between the magnetic poles of the two magnets affects the performance of the device, and thus, the performance of the device depends on the assembly accuracy. Further, since the structure does not include a magnetic flux conducting piece (magnetic flux inducting piece), as in PTL 1, unless a width of the magnetization pitch (a width of the magnetic pole in the circumferential direction) is increased, a stabilization magnetic field having a certain strength cannot be applied to the magnetic wire. Therefore, there is a problem that the device becomes large.

### CITATION LIST

### PATENT LITERATURE

PTL 1: JP H8-136558 A
PTL 2: JP 2022-55001 A

### SUMMARY OF INVENTION

### PROBLEMS TO BE SOLVED BY INVENTION

As described above, in a case where a magnetic field source is a rotating body with multi-poles, when there is an attempt to align the magnetic wire to be parallel to the rotation axis and apply a magnetic field which is parallel in the axial direction and has a uniform strength to the entire magnetic wire, the structure becomes complicated, and downsizing becomes difficult. In addition, in a case where the magnetic wire is provided when the axial direction (wire length direction) of the magnetic wire is set as a tangential direction of a circumference of the rotation axis or a radius direction of the rotation axis, it is required to provide a magnetic member of which the shape and the placement are designed according to the magnetization pitch, which also adds a disadvantage of a lack in versatility.

Therefore, an example embodiment of the present invention provides a rotation detection device capable of detecting rotation by a combination of a multi-pole magnet and a power generation sensor with a simple and small structure.

### SOLUTION TO PROBLEMS

An example embodiment of the present invention provides a rotation detection device having a simple configuration and a small size that can obtain a high-output signal by a combination of a power generation sensor including magnetic flux conducting pieces (magnetic flux inducting pieces) and a ring-shaped multi-pole magnet having an inclined magnetization pattern on an outer circumferential portion.

An example embodiment of the present invention provides a rotation detection device having the following exemplary features.
1. A rotation detection device including,
   a ring-shaped multi-pole magnet provided on a rotation shaft, and
   a power generation sensor (for example, one power generation sensor) to detect a magnetic field which changes according to rotation of the multi-pole magnet, in which
   the power generation sensor includes,
      a magnetic wire configured to exhibit a large Barkhausen effect,
      a coil that is wound around the magnetic wire, and
      a pair of magnetic flux conducting pieces that are made of magnetically-soft components respectively magnetically coupled to both end portions of the magnetic wire, the magnetic flux conducting pieces being provided to be symmetrical to each other with respect to a symmetry plane which is set at a central position in an axial direction of the magnetic wire,
   the ring-shaped multi-pole magnet has a magnetization pattern on an outer circumferential portion, the magnetization pattern being inclined with respect to the rotation shaft, and
   the power generation sensor faces the magnetization pattern of the multi-pole magnet in a posture in which the axial direction (wire length direction) of the magnetic wire is parallel to the rotation shaft.

With this arrangement, the power generation sensor is even placed such that the axial direction of the magnetic wire is parallel to the rotation shaft of the ring-shaped multi-pole magnet, and different magnetic poles can be opposed to the pair of magnetic flux conducting pieces magnetically coupled to the both end portions of the magnetic wire by the inclined magnetization pattern of the multi-pole magnet. Thereby, the multi-pole magnet rotates together with the rotation shaft. Therefore, the magnetic wire exhibits a large Barkhausen effect, and a pulse voltage is generated.

In addition, as the ring-shaped multi-pole magnet having an inclined magnetization pattern on the outer circumferential portion, a magnet that has a simple configuration and is inexpensive, such as a skew magnet used in an electric motor, can be typically used. It is easy to combine the multi-pole magnet and the power generation sensor including the magnetic flux conducting pieces, and thus, a versatile rotation detection device is implemented.

As described above, by using the combination of the ring-shaped multi-pole magnet having an inclined magnetization pattern and the power generation sensor including the magnetic flux conducting pieces, it is possible to implement a rotation detection device capable of detecting a rotation with a simple structure and a small size.

2. The rotation detection device according to clause 1, in which
the pair of magnetic flux conducting pieces include,
a pair of axially-orthogonal portions to which the both end portions of the magnetic wire are respectively fixed and which extend parallel to each other from the both end portions of the magnetic wire in an axially-orthogonal direction orthogonal to the axial direction, and
a pair of axially-parallel portions which extend toward each other from distal end portions of the pair of axially-orthogonal portions along the axial direction and have adjacent ends opposing each other with a gap therebetween in the axial direction, and
the pair of axially-parallel portions face the magnetization pattern of the multi-pole magnet.

With this arrangement, the axially-parallel portions parallel to the axial direction of the magnetic wire are located between the magnetic wire and the magnetic pole surface of the inclined magnetization pattern formed on the outer circumferential portion of the ring-shaped multi-pole magnet. Thereby, the applied magnetic field is magnetically collected by the magnetic flux conducting pieces made of magnetically-soft components, and is guided to the both end portions of the magnetic wire. Further, the magnetic flux directed in a direction perpendicular to the axial direction of the magnetic wire is shielded by the axially-parallel portions. In this way, the magnetic field in the axial direction can be applied to the magnetic wire, and thus, a large Barkhausen effect can be sufficiently caused even with a fine magnetization pitch. In other words, it is possible to implement a rotation detection device capable of obtaining a high-output signal with a small size.

3. The rotation detection device according to clause 2, in which a distance of the gap in the axial direction is set to 5% to 50% of a distance in the axial direction between the pair of axially-orthogonal portions at coupling positions between the magnetic wire and the pair of axially-orthogonal portions.

With this arrangement, a large Barkhausen effect inherent to the magnetic wire can be almost perfectly caused, and thus, it is possible to implement a power generation sensor having a small size and a high output.

4. The rotation detection device according to any one of clauses 1 to 3, in which the magnetization pattern includes a plurality of magnetic poles which are arranged in a circumferential direction around the rotation shaft and are formed in a band shape inclined with respect to the rotation shaft, and the plurality of magnetic poles include N poles and S poles which are alternately arranged in the circumferential direction.

With this arrangement, it is possible to conduct the magnetic flux from the magnetic poles having different polarities to the pair of magnetic flux conducting pieces of the power generation sensor, and thus, it is possible to implement the power generation sensor having a small size and a high output.

5. The rotation detection device according to clause 4, in which, when one end portion of the both end portions of the magnetic wire of the power generation sensor opposes one N pole of the N poles (typically, opposes in a rotational radius direction of the rotation shaft through one of the magnetic flux conducting pieces), an inclination angle (skew angle) of the plurality of magnetic poles with respect to the rotation shaft is determined such that the other end portion of the both end portions of the magnetic wire opposes one S pole of the S poles that is adjacent to the one N pole (typically, opposes in a rotational radius direction of the rotation shaft through the other of the magnetic flux conducting pieces).

With this arrangement, it is possible to efficiently conduct the magnetic flux from the magnetic poles having different polarities to the both end portions of the magnetic wire, and thus, it is possible to implement the power generation sensor having a small size and a high output.

6. The rotation detection device according to clause 4, in which, when one of the pair of magnetic flux conducting pieces of the power generation sensor faces one N pole of the N poles (typically, faces in a rotational radius direction of the rotation shaft), an inclination angle (skew angle) of the plurality of magnetic poles with respect to the rotation shaft is determined such that the other of the pair of magnetic flux conducting pieces faces one S pole of the S poles that is adjacent to the one N pole (typically, faces in a rotational radius direction of the rotation shaft).

With this arrangement, it is possible to efficiently conduct the magnetic flux from the magnetic poles having different polarities to the pair of magnetic flux conducting pieces of the power generation sensor, and thus, it is possible to implement the power generation sensor having a small size and a high output.

7. The rotation detection device according to any one of clauses 1 to 6, further including a magnetic sensor to identify a magnetic pole of the ring-shaped multi-pole magnet at a predetermined position in a circumferential direction around the rotation shaft.

With this arrangement, the magnetic pole is identified by the magnetic sensor at a predetermined position in the circumferential direction, and thus, it is possible to recognize an application state of the magnetic field to the power generation sensor. Therefore, by using the output signal of the magnetic sensor, it is possible to identify the forward rotation and the reverse rotation of the rotational motion of the rotation shaft, that is, to detect the rotation direction.

8. The rotation detection device according to any one of clauses 1 to 7, further including,
a circuit board that is placed between the power generation sensor and the multi-pole magnet, in which
the power generation sensor is mounted on a principal surface of the circuit board opposite to the multi-pole magnet.

The magnetic sensor may be mounted on the circuit board together with the power generation sensor. Thereby, the relative placement between the power generation sensor and the magnetic sensor is accurately determined.

The above and other objects, features and advantages of the present invention will become more apparent from the following description of the example embodiments with reference to the attached drawings.

### BRIEF DESCRIPTION OF DRAWINGS

[FIG. 1A] FIG. 1A is a perspective view of a rotation detection device according to a first example embodiment.
[FIG. 1B] FIG. 1B is a front view as seen in an arrow direction 11 in FIG. 1A.
[FIG. 2A] FIG. 2A is an enlarged perspective view of a power generation sensor included in the rotation detection device.
[FIG. 2B] FIG. 2B is a front view as seen in an arrow direction 101 in FIG. 2A.
[FIGS. 3A-3C] FIGS. 3A, 3B, and 3C are diagrams showing results of two-dimensional magnetic simulations for an arrangement (comparative example) without a magnetic flux conducting piece.
[FIGS. 4A-4C] FIGS. 4A, 4B, and 4C are diagrams showing results of two-dimensional magnetic simulations for an arrangement (example) including magnetic flux conducting pieces.
[FIG. 5] FIG. 5 is an image obtained by observing a magnetization pattern of a skew magnet used in experiments with a magnet viewer.
[FIG. 6] FIG. 6 is a diagram illustrating experimental results obtained by examining a relationship between a ratio of a gap between adjacent ends with respect to a distance between axially-orthogonal portions of a pair of magnetic flux conducting pieces and an output wave height.
[FIGS. 7A-7B] FIG. 7A is a perspective view of a rotation detection device according to a comparative example, and FIG. 7B is a top view of an arrangement of FIG. 7A.
[FIG. 8] FIG. 8 is a perspective view of a rotation detection device according to a second example embodiment.

### DESCRIPTION OF EXAMPLE EMBODIMENTS

The present invention will hereinafter be described based on the example embodiments shown in the drawings. However, it should be understood that the invention be not limited by the following example embodiments.

### [First example embodiment]

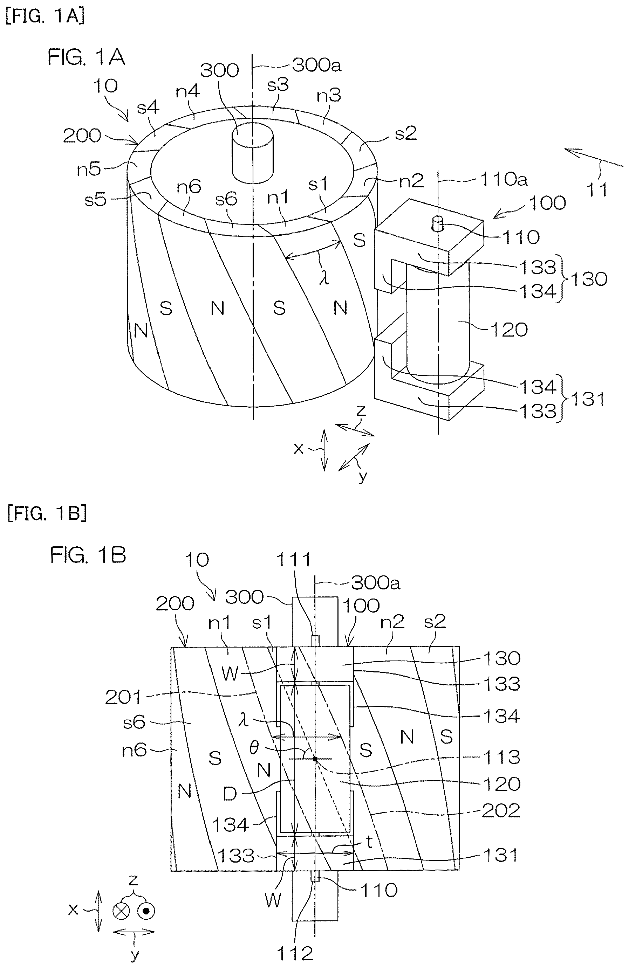

FIG. 1A and FIG. 1B illustrate a rotation detection device 10 according to a first example embodiment. FIG. 1A is a perspective view of the rotation detection device 10, and FIG. 1B is a front view of the rotation detection device 10 as seen in an arrow direction 11 in FIG. 1A.

The rotation detection device 10 includes a ring-shaped multi-pole magnet 200 provided on a rotation shaft 300 and one power generation sensor 100. The rotation shaft 300 rotates about a rotation axis 300a coinciding with a central axis of the rotation shaft 300, and the multi-pole magnet 200 also rotates about the rotation axis 300a together with the rotation shaft 300.

The power generation sensor 100 includes a magnetic wire 110 exhibiting a large Barkhausen effect and a coil 120 wound around the magnetic wire 110. The power generation sensor 100 further includes a pair of magnetic flux conducting pieces 130 and 131 (magnetic flux inducting pieces) each of which is made of a pair of magnetically-soft components magnetically coupled to both end portions of the magnetic wire 110.

The ring-shaped multi-pole magnet 200 has a magnetization pattern inclined with respect to the rotation shaft 300 on an outer circumferential portion. The ring shape is a rotating body for which the rotation axis 300a is set as a central axis, and is a tubular shape in this example embodiment. The magnetization pattern of the outer circumferential portion is inclined with respect to a direction parallel to the rotation axis 300a.

The power generation sensor 100 is placed such that an axial direction (wire length direction) of the magnetic wire 110 is parallel to the rotation axis 300a, and the pair of magnetic flux conducting pieces 130 and 131 face the magnetization pattern.

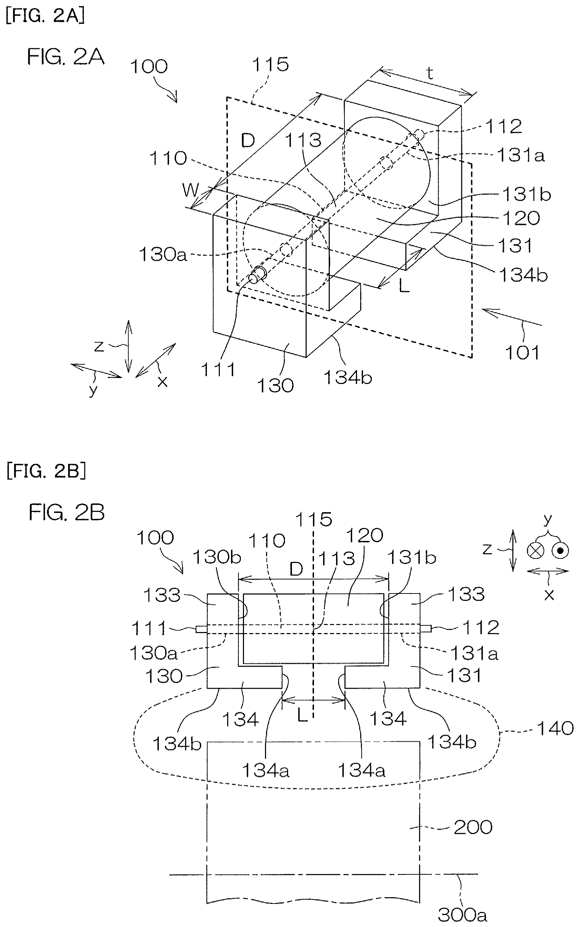

FIG. 2A is a perspective view of the power generation sensor 100, and FIG. 2B is a front view of the power generation sensor 100 as seen in an arrow direction 101 in FIG. 2A. The power generation sensor 100 includes the magnetic wire 110 exhibiting a large Barkhausen effect, the coil 120 wound around the magnetic wire 110, and the pair of magnetic flux conducting pieces 130 and 131 made of magnetically-soft components. The coil 120 is wound around the magnetic wire 110 such that a first end portion 111 and a second end portion 112 of the magnetic wire 110 are exposed with the same length from the coil 120. In this example embodiment, the coil 120 is wound around the magnetic wire 110 between the pair of magnetic flux conducting pieces 130 and 131. The pair of magnetic flux conducting pieces 130 and 131 are respectively magnetically coupled to the first end portion 111 and the second end portion 112 of the magnetic wire 110.

The pair of magnetic flux conducting pieces 130 and 131 are configured to have substantially the same shape and substantially the same size. More specifically, the pair of magnetic flux conducting pieces 130 and 131 are arranged to be symmetrical with each other with respect to a symmetry plane 115 (a virtual plane to be used to describe the geometric layout) that is orthogonal to an axial direction x (wire length direction) of the magnetic wire 110 at a central position (hereinafter, referred to as "axially-central position") 113 of the magnetic wire 110 in the axial direction x. The pair of magnetic flux conducting pieces 130 and 131 include axially-orthogonal portions 133 extending parallel to each other from both end portions 111 and 112 of the magnetic wire 110 in an axially-orthogonal direction z orthogonal to the axial direction x, and axially-parallel portions 134 extending toward each other from distal end portions of the axially-orthogonal portions 133 along the axial direction x. More specifically, the magnetic flux conducting pieces 130 and 131 include axially-orthogonal portions 133 which have a substantially rectangular parallelepiped shape, and axially-parallel portions 134 which have a substantially rectangular parallelepiped shape and are connected to distal end portions of the axially-orthogonal portions 133, and have an L shape bent at a right angle at coupling portions between the axially-orthogonal portions 133 and the axially-parallel portions 134.

In this example, the axially-orthogonal portion 133 has a thickness W in the axial direction x. Opposing inner surfaces of the pair of axially-orthogonal portions 133 oppose each other with a distance D in the axial direction x at coupling positions between the magnetic wire 110 and the axially-orthogonal portions 133. Adjacent ends 134a of the pair of axially-parallel portions 134 oppose each other with a gap having a distance L therebetween in the axial direction x.

The both end portions 111 and 112 of the magnetic wire 110 are respectively fixed to proximal portions of the axially-orthogonal portions 133 of the pair of magnetic flux conducting pieces 130 and 131. More specifically, wire placement portions 130a and 131a in which a hole or a groove is formed to penetrate the magnetic wire 110 in the axial direction x are provided at the proximal portions of the axially-orthogonal portions 133. FIG. 2A and the like illustrate an example in which the wire placement portions 130a and 131a are formed of holes. In a case where the wire placement portions 130a and 131a are formed of grooves, preferably, the grooves are formed to be deeper along the axially-orthogonal direction z so as to open to end surfaces opposite to the axially-parallel portions 134. In a state where the first end portion 111 and the second end portion 112 of the magnetic wire 110 penetrate through the axially-orthogonal portions 133 by being placed in the wire placement portions 130a and 131a, the first end portion 111 and the second end portion 112 of the magnetic wire 110 are respectively fixed to the axially-orthogonal portions 133. More specifically, resins (not illustrated) are provided in the holes or the grooves formed as the wire placement portions 130a and 131a, and thus, the end portions 111 and 112 of the magnetic wire 110 are respectively fixed to and coupled with the axially-orthogonal portions 133. Thereby, the magnetic wire 110 is mechanically coupled to and magnetically coupled to the pair of magnetic flux conducting pieces 130 and 131.

The adjacent ends 134a of the axially-parallel portions 134 of the pair of magnetic flux conducting pieces 130 and 131 oppose each other with the symmetry plane 115 passing through the axially-central position 113 of the magnetic wire 110 therebetween. That is, the adjacent ends 134a of the axially-parallel portions 134 oppose each other with a gap therebetween in the axial direction x. A middle position of the gap between the adjacent ends 134a in the axial direction x corresponds to a position of the axially-central position 113 in the axial direction x, and therefore, distances in the axial direction x from the adjacent ends 134a of the pair of axially-parallel portions 134 to the symmetry plane 115 are equal. The distance L of the gap in the axial direction x is set to 5% to 50% of the distance D between the pair of axially-orthogonal portions 133 at the coupling positions between the magnetic wire 110 and the axially-orthogonal portions 133.

More specifically, the distance D is a distance in the axial direction x between inner side surfaces 130b and 131b of the pair of magnetic flux conducting pieces 130 and 131 (inner side surfaces of the axially-orthogonal portions 133) that oppose each other in the axial direction x at the coupling positions between the magnetic wire 110 and the axially-orthogonal portions 133.

The power generation sensor 100 is designed such that a region located on sides of the axially-parallel portions 134 that are opposite to the magnetic wire 110 serves as a detection region 140. A magnetic field source that generates a magnetic field to be detected is placed in the detection region 140. The magnetic field source is the ring-shaped multi-pole magnet 200 in the rotation detection device 10 of FIG. 1A and FIG. 1B. The magnetic poles of the multi-pole magnet 200 move relative to the power generation sensor 100 to pass through the detection region 140. That is, the detection region 140 is placed on the movement path of the magnetic poles of the multi-pole magnet 200. The movement path of the magnetic poles is on a circumference on which the rotation axis 300a is set as a center as seen in the axial direction x, and the circumference has a tangent parallel to a width direction y orthogonal to the axial direction x and the axially-orthogonal direction z in the detection region 140.

The pair of magnetic flux conducting pieces 130 and 131 are arranged such that a magnetic field generated in a space including the magnetic flux conducting pieces 130 and 131 is corrected into a magnetic field in the axial direction x and the magnetic field in the axial direction x is applied to the magnetic wire 110, the magnetic field being generated by the magnetic field source (the multi-pole magnet 200) placed in the detection region 140. The axially-parallel portion 134 can collect a magnetic flux from a surface 134b opposing the multi-pole magnet 200 (a detection-region opposing surface opposing the detection region 140, hereinafter, referred to as "detection-region opposing surface 134b"), and guide the magnetic flux into the magnetic flux conducting pieces 130 and 131. In this example embodiment, the detection-region opposing surface 134b is a surface parallel to the axial direction x. The detection-region opposing surface 134b may be a flat surface parallel to the width direction y, or may be a cylindrical-shaped curved surface matching the cylindrical-shaped outer circumferential surface of the multi-pole magnet 200.

As illustrated in FIG. 1A and FIG. 1B, the axially-parallel portions 134 parallel to the axial direction x of the magnetic wire 110 are located between the magnetic wire 110 and the magnetic pole surface of the inclined magnetization pattern provided on the outer circumferential portion of the ring-shaped multi-pole magnet 200. Therefore, the applied magnetic field is magnetically collected by the pair of magnetic flux conducting pieces 130 and 131 made of magnetically-soft components, and is guided to the both end portions of the magnetic wire 110. Further, the magnetic flux directed in a direction perpendicular to the axial direction x of the magnetic wire 110 is shielded by the axially-parallel portions 134. Therefore, the applied magnetic field is corrected into a magnetic field in the axial direction x of the magnetic wire 110, and thus, a large Barkhausen effect can be sufficiently caused. Thereby, a high output signal can be obtained. The axial direction x (wire length direction) of the magnetic wire 110 of the power generation sensor 100 is placed parallel with the rotation shaft 300.

The magnetic flux conducting pieces 130 and 131 made of magnetically-soft components and the coil 120 are fixed to a case (not illustrated) that covers these components with the use of an adhesive resin, by fitting, or by other proper fixing means. As described above, the both end portions 111 and 112 of the magnetic wire 110 are fixed in the wire placement portions 130a and 131a made of two through holes or grooves by the resin (not illustrated) . Therefore, the power generation sensor 100 has a structure such that the pair of magnetic flux conducting pieces 130 and 131, the coil 120, and the magnetic wire 110 are fixed together for integration.

The magnetization pattern of the outer circumferential portion of the ring-shaped multi-pole magnet 200 includes a plurality of (12 in this example embodiment) magnetic poles (magnetic pole bands) n1, s1, n2, s2, ...... that are arranged in the circumferential direction around the rotation shaft 300 and are formed in a band shape inclined with respect to the rotation shaft 300. The plurality of magnetic poles include N poles n1, n2, ... and S poles s1, s2, ... alternately arranged in the circumferential direction. In this example embodiment, as an example, an arrangement in which six N poles n1 to n6 and six S poles s1 to s6 are provided is illustrated, but the number of magnetic poles may be another number than the number.

When one end of the both end portions of the magnetic wire 110 of the power generation sensor 100 opposes one N pole (more specifically, opposes the rotational radius direction of the rotation shaft 300 through one of the magnetic flux conducting pieces 130 and 131), the other end of the both end portions of the magnetic wire 110 opposes one S pole adjacent to the one N pole (more specifically, opposes the rotational radius direction of the rotation shaft 300 through the other of the magnetic flux conducting pieces 130 and 131). An inclination angle θ (skew angle) of the plurality of magnetic poles with respect to the rotation shaft 300 is determined so as to achieve such a positional relationship. In the example of FIG. 1B, one end portion 112 of the magnetic wire 110 faces the N pole n1, and the other end portion 111 of the magnetic wire 110 faces the S pole s1.

In this example embodiment, when one of the pair of magnetic flux conducting pieces 130 and 131 of the power generation sensor 100 faces one N pole (more specifically, faces the rotational radius direction of the rotation shaft 300), the inclination angle θ (skew angle) of the plurality of magnetic poles with respect to the rotation shaft 300 is determined such that the other of the pair of magnetic flux conducting pieces 130 and 131 faces one S pole adjacent to the one N pole (more specifically, faces the rotational radius direction of the rotation shaft 300). In the example of FIG. 1B, one magnetic flux conducting piece 131 faces the N pole n1, and the other magnetic flux conducting piece 130 faces the S pole s1.

With this arrangement, it is possible to efficiently conduct the magnetic flux from the magnetic poles having different polarities to the pair of magnetic flux conducting pieces 130 and 131 of the power generation sensor 100, and thus, it is possible to implement the power generation sensor 100 having a small size and a high output.

When the rotation shaft 300 is viewed from the magnetic wire 110 (refer to FIG. 1B), the most preferable design is a design in which the multi-pole magnet 200 has an angle position such that a center line 201 of one N pole (n1) directly faces one magnetic flux conducting piece (131) and a center line 202 of one S pole (s1) adjacent to the one N pole (n1) directly faces the other magnetic flux conducting piece (130). Assuming that a circumferential distance around the rotation shaft 300 from the center line 201 of one N pole (n1) to the center line 202 of the adjacent S pole (s1) is a magnetic-pole pitch A, the design corresponds to the inclination angle θ (skew angle) that is shifted in the circumferential direction by the circumferential distance equal to the magnetic-pole pitch λ with respect to an axial distance corresponding to a distance (D+2W) (this distance is approximately equal to the entire length of the magnetic wire 110) between the outer end portions of the pair of magnetic flux conducting pieces 130 and 131. The best case is a case where the circumferential distance is equal to the magnetic-pole pitch λ. On the other hand, in a case where the circumferential distance is appropriately determined within a range equal to or larger than 1/2 of the magnetic-pole pitch λ and equal to or smaller than 3/2 of the magnetic-pole pitch λ, the pulse voltage can be output from the power generation sensor 100. The plurality of magnetic poles n1, s1, n2, s2, ...... are typically formed with equal widths along the circumferential direction around the rotation axis 300a. In this case, the magnetic-pole pitch λ is substantially equal to the width of each magnetic pole.

In the example of FIG. 1B, the skew angle (inclination angle θ) of the skew magnets included in the multi-pole magnet 200 is substantially the same angle as a diagonal line of a rectangle in which a width t of the pair of axially-parallel portions 134 is set to a length of two opposing sides and D+2W is set to a length of other two opposing sides. The magnetization pitch (magnetic-pole pitch λ) in the circumferential direction is substantially equal to the width t of the magnetic flux conducting pieces 130 and 131. As described above, it is possible to cope with a magnet having a narrow magnetization pitch, and thus, a small rotation detection device can be implemented.

### [First Model]

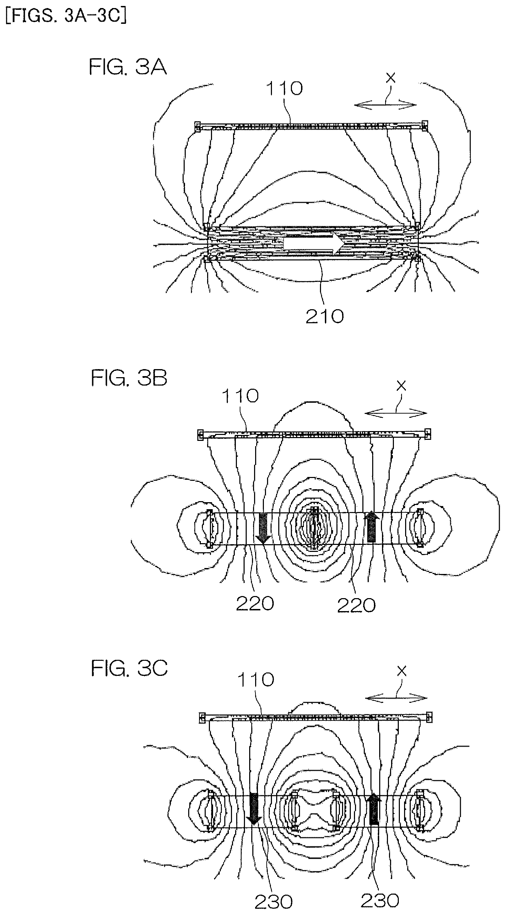

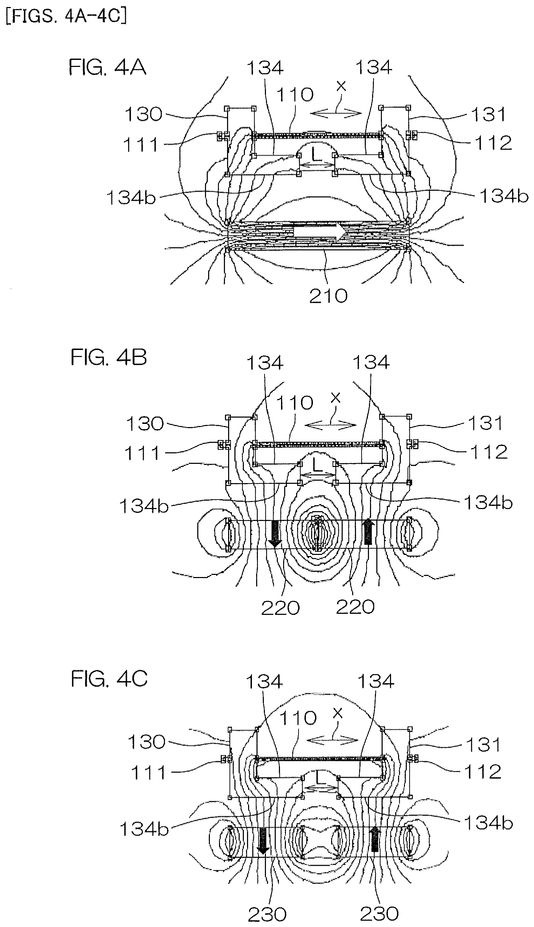

FIGS. 3A, 3B, and 3C illustrate two-dimensional magnetic simulation results in a vertical cross section passing through the axis of the magnetic wire 110 in a case where the magnetic flux conducting pieces are not provided (comparative example). On the other hand, FIGS. 4A, 4B, and 4C illustrate two-dimensional magnetic simulation results in a vertical cross section passing through the axis of the magnetic wire 110 in a case where the magnetic flux conducting pieces 130 and 131 are magnetically coupled to the both end portions of the magnetic wire 110 (example).

In FIG. 3A and FIG. 4A, the magnetic field source is a magnet 210 that is magnetized in an arrow direction (one direction of the axial direction x) parallel to the magnetic wire 110. In FIG. 3B and FIG. 4B, the magnetic field source is two individual magnets 220 and 220 that are magnetized in arrow directions (directions opposite to each other in the axially-orthogonal direction z) perpendicular to the magnetic wire 110 and are placed close to each other in the axial direction x. In FIG. 3C and FIG. 4C, the magnetic field source is two individual magnets 230 and 230 that are magnetized in arrow directions (directions opposite to each other in the axially-orthogonal direction z) perpendicular to the magnetic wire 110 and are placed apart from each other in the axial direction x.

In order to make the magnetic flux distribution in the magnetic wire 110 uniform over a range of the entire axis length, it is desirable to allow the magnetic flux to enter into one end portion of the magnetic wire 110 and to exit from the other end portion of the magnetic wire 110. That is, it is desirable to decrease an amount of the magnetic flux entering into and exiting from intermediate positions in the axial direction (hereinafter, referred to as "intermediate portion") between the both end portions of the magnetic wire 110 as possible.

In the magnetic simulation results according to the comparative example illustrated in FIG. 3A and FIG. 3B, most of the magnetic flux generated by the magnets 210 and 220 enters from the intermediate portion of the magnetic wire 110 and exits at the intermediate portion. Therefore, the magnetic flux density is higher in the intermediate region of the magnetic wire 110 than in the both end regions of the magnetic wire 110. Further, even in a case where the magnet is not located at the central portion (near the axial center position) of the magnetic wire 110 as illustrated in FIG. 3C, the distribution of the magnetic flux density is similar.

From the magnetic simulation results illustrated in FIG. 4A to FIG. 4C, it can be seen that most of the magnetic flux of the magnet 210, 220, or 230 is attracted and collected by the magnetic flux conducting pieces 130 and 131 made of the L-shaped magnetically-soft components. Although a very small part of the magnetic flux leaks through the gap (distance L) between the pair of axially-parallel portions 134, most of the magnetic flux passes through a path from one end of the magnetic wire 110 to the other end of the magnetic wire 110.

The magnetic flux directed from the magnet 210, 220, or 230 toward the intermediate portion of the magnetic wire 110 is shielded by the magnetic flux conducting pieces 130 and 131 made of magnetically-soft components, particularly, by the axially-parallel portions 134 of the magnetic flux conducting pieces 130 and 131. Therefore, no magnetic flux enters into the intermediate portion of the magnetic wire 110. More specifically, the magnetic flux directed from the magnet 210, 220, or 230 enters from the detection-region opposing surface 134b of the axially-parallel portion 134 of one magnetic flux conducting piece 131, and is conducted through the magnetic flux conducting piece 131 to reach the second end portion 112 of the magnetic wire 110. Further, the magnetic flux directed from the first end portion 111 of the magnetic wire 110 is conducted through the other magnetic flux conducting piece 130 to reach the axially-parallel portion 134 of the other magnetic flux conducting piece 130, and then reaches the magnet 210, 220, or 230 from the detection-region opposing surface 134b of the other magnetic flux conducting piece 130. Thus, a uniform magnetic flux distribution can be obtained over the entire length of the magnetic wire 110. That is, a magnetic field having a uniform strength can be generated parallel to the axial direction x over the entire length of the magnetic wire 110.

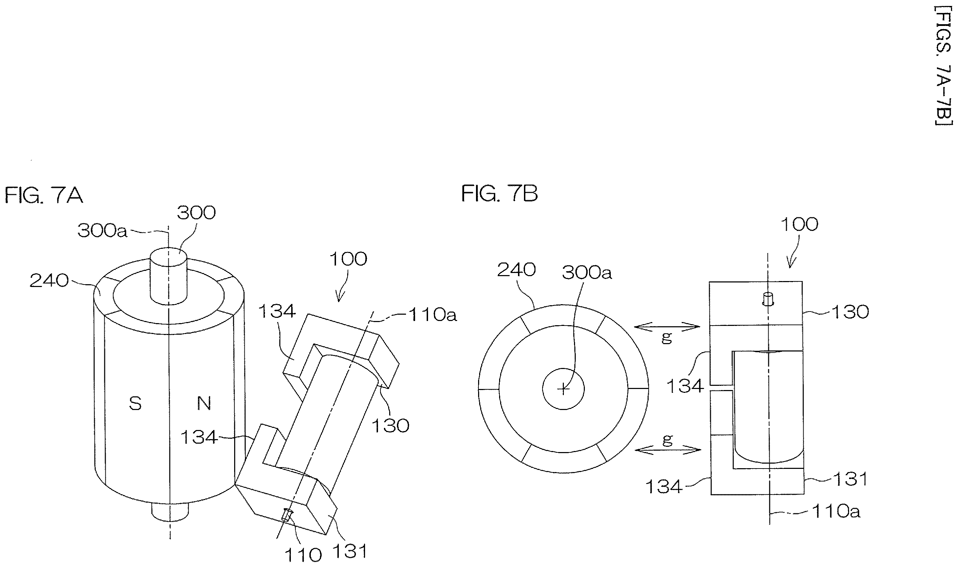

In order to maximize the available electric power, it is important that the reversal of the magnetization direction of the soft layer propagates to the entire magnetic wire from a state where the magnetization direction of the magnetic wire is entirely consistent. FIG. 3A corresponds to the arrangement of FIG. 9 of PTL 1, and FIG. 3C corresponds to the arrangement of FIG. 7 of PTL 1 and the arrangement of FIG. 1 of PTL 2. In these arrangements without the magnetic flux conducting pieces, the magnetization direction of the magnetic wire is partly inconsistent, and in this state, only a pulse signal having a very small amplitude can be obtained.

As illustrated in FIGS. 4A, 4B, and 4C, in any of the three different magnetization patterns, in the power generation sensor 100 according to the first example embodiment, the applied magnetic field is corrected in the axial direction x of the magnetic wire 110 by the action of the magnetic flux conducting pieces 130 and 131 (particularly, the axially-parallel portions 134). Thereby, a uniform magnetic field is applied to the entire magnetic wire 110, and a stable high-output pulse signal can be output.

### [Second Model]

In the first model, magnetic poles having different polarities oppose the axially-parallel portion 134 of the first magnetic flux conducting piece 130 and the axially-parallel portion 134 of the second magnetic flux conducting piece 131 (refer to FIG. 4A to FIG. 4C). In this case, as described above, the magnetic field is corrected in the axial direction x of the magnetic wire 110 by the first magnetic flux conducting piece 130 and the second magnetic flux conducting piece 131, and a uniform magnetic field is applied to the entire magnetic wire 110.

On the other hand, it is considered to use, as a magnetic field source, a second model using a skew magnet that is a cylindrical multi-pole magnet obtained by performing skew magnetization. The skew magnet includes a plurality of magnetic poles that are provided on an outer circumferential surface and are alternately placed in a circumferential direction around a central axis of a cylindrical shape, and the plurality of magnetic poles include N poles and S poles that are alternately placed in the circumferential direction. Each magnetic pole is inclined with respect to the central axis at a predetermined skew angle. In the second model, the skew magnet has the central axis parallel to the axial direction x of the magnetic wire 110, and the outer circumferential surface opposes the first magnetic flux conducting piece 130 and the second magnetic flux conducting piece 131 in the detection region 140.

When the axially-parallel portion 134 of the first magnetic flux conducting piece 130 and the axially-parallel portion 134 of the second magnetic flux conducting piece 131 face magnetic poles having different polarities, unlike the first model, a magnetic-pole boundary line is inclined with respect to the wire length direction of the magnetic wire 110 at the axially-central position 113 of the magnetic wire 110 (refer to FIG. 1B).

A sample of the second model was manufactured, the skew magnet was rotated about the central axis, and examination was performed whether or not the correction function of the magnetic flux conducting piece was exhibited as in the first model by an experiment.

In the sample of the power generation sensor 100 used in the experiment, the magnetic wire length was 11 mm, the distance D between the axially-orthogonal portions 133 of the magnetic flux conducting pieces 130 and 131 was 7 mm, and the distance L between the adjacent ends 134a of the pair of axially-parallel portions 134 was 2 mm. The arrangement of the sample of the skew magnet used in the experiment was an arrangement in which an outer circumferential diameter is 14 mm, an inner circumferential diameter is 10 mm, a length in the central axis direction is 8 mm, and the number of magnetic poles is 12.

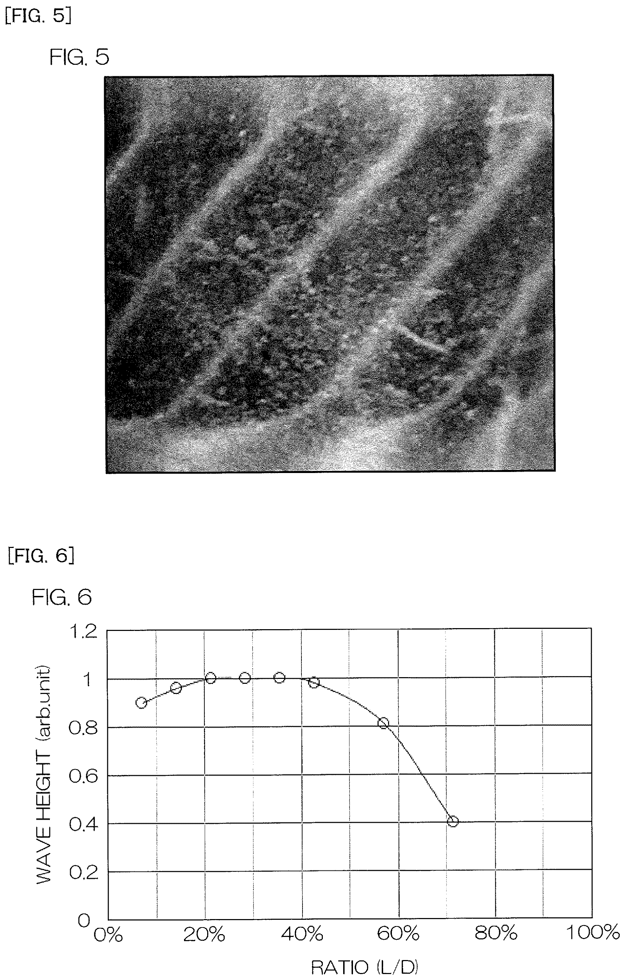

FIG. 5 is an actual image of a magnetization pattern obtained by observing the skew magnet used for the sample with a magnet viewer. The magnetization pitch is approximately 3.7 mm. This is substantially the same as the width (width t illustrated in FIG. 2A) of the magnetic flux conducting pieces 130 and 131 facing each other, the width being 3.5 mm.

By using these samples, in the placement of the first example embodiment, the skew magnet was rotated in forward rotation and reverse rotation, and output characteristics were confirmed. As a result, the power generation sensor 100 output a stable high-output pulse signal.

As described above, even in a case where the magnetic-pole boundary line is inclined with respect to the wire length direction of the magnetic wire 110 at the axially-central position 113 of the magnetic wire 110, it has been confirmed that the function of correcting the magnetic field in the axial direction x of the magnetic wire 110 by the action of the magnetic flux conducting pieces 130 and 131 is effective. The structure in which the magnetic-pole boundary line is inclined with respect to the wire length direction of the magnetic wire 110 at the axially-central position 113 of the magnetic wire 110 is not described in any of PTL 1 and PTL 2.

Note that a technique of skew magnetization has been established mainly for magnetization of a magnet of an electric motor. For example, skew magnetization can be performed by magnetizing a cylindrical magnetic component while rotating the magnetic component and moving the magnetic component in a direction parallel to the central axis of the magnetic component.

In the sample of the power generation sensor 100 of the second model used in the experiment, the distance D between the axially-orthogonal portions 133 of the first magnetic flux conducting piece 130 and the second magnetic flux conducting piece 131 was set to 7 mm, and the distance L between the adjacent ends 134a of the axially-parallel portions 134 of the first magnetic flux conducting piece 130 and the second magnetic flux conducting piece 131 was set to 2 mm. In this case, a ratio of the distance L between the adjacent ends 134a with respect to the distance D between the pair of axially-orthogonal portions 133 is 29%. The relationship between the distance ratio L/D and the output characteristics was investigated.

The results are shown in FIG. 6. A horizontal axis represents the ratio L/D (%), and a vertical axis represents an output wave height normalized when a maximum value is set to 1. The wave height of the pulse signal is an average value of absolute values of positive and negative two pulses when the skew magnet is rotated in one direction (forward rotation) and positive and negative two pulses when the skew magnet is rotated in the other direction (reverse rotation).

From FIG. 6, it can be seen that a stable high output is obtained when the ratio L/D is 5% to 50%. In a case where the ratio L/D is lower than 5%, it is presumed that, since the gap between the adjacent ends 134a is narrow (the distance L is short), the output characteristics are influenced by the magnetic path defined through this narrow gap. In addition, in a case where the ratio L/D exceeds 50%, it is also presumed that, since an area of the magnetically-soft components (the magnetic flux conducting pieces 130 and 131, more specifically, the detection-region opposing surfaces 134b) that oppose the magnet surface is reduced, magnetic flux collection effect is reduced. In addition, it is presumed that, since an area in which the axially-parallel portions 134 of the magnetic flux conducting pieces 130 and 131 cover the magnetic wire 110 from the magnet is small, the output characteristics are influenced by a decrease in the shielding effect.

In a case where the ratio L/D is in a range of not less than 5% and not more than 50%, a large Barkhausen effect inherent to the magnetic wire 110 can be sufficiently caused. More preferably, the ratio L/D is in a range of not less than 15% and not more than 45%, still more preferably, in a range of not less than 20% and not more than 40%.

### [Comparative Example]

FIG. 7A is a perspective view of a rotation detection device according to a comparative example, and FIG. 7B is a top view of the arrangement of FIG. 7A. This rotation detection device is an example of a structure in which the magnetic-pole boundary line of the magnetization pattern of the magnet is inclined with respect to the wire length direction of the magnetic wire 110 at the axially-central position of the magnetic wire 110. As compared with the structure of the first example embodiment (refer to FIG. 1A and FIG. 1B), the arrangement of the ring-shaped multi-pole magnet 240 is different, and the placement of the power generation sensor 100 with respect to the ring-shaped multi-pole magnet 240 is different.

The ring-shaped multi-pole magnet 240 includes the plurality of magnetic poles in the circumferential direction around the central axis (rotation axis 300a), and the plurality of magnetic poles include N poles and S poles that are alternately arranged in the circumferential direction. Each magnetic pole is parallel to the central axis, and, accordingly, the magnetic-pole boundary line is parallel to the rotation shaft 300.

The power generation sensor 100 is placed opposite to the outer circumferential surface of the ring-shaped multi-pole magnet 240 such that the central axis 110a (that is, the wire length direction) of the magnetic wire 110 is inclined with respect to rotation shaft 300. Thereby, the magnetic-pole boundary line of the magnetization pattern is inclined with respect to the wire length direction of the magnetic wire 110 at the axially-central position of the magnetic wire 110.

However, as illustrated in FIG. 7B, in a case where a diameter of the ring-shaped multi-pole magnet 240 is small, a distance g between the axially-parallel portions 134 of the two magnetic flux conducting pieces 130 and 131 and the magnetic pole surface of the magnet 240 increases. As a result, it is difficult to obtain the magnetic field strength required for reversing the magnetization direction of the magnetic wire 110. This problem can be solved by increasing the magnetization pitch or increasing the outer diameter of the ring. However, both solutions go against the demand for downsizing of devices.

In the first example embodiment using the skew magnet, such a problem does not occur. In the first example embodiment, the axial direction x of the magnetic wire 110 of the power generation sensor 100 is parallel to the rotation axis 300a, and the detection-region opposing surfaces 134b of the axially-parallel portions 134 directly face the magnetic pole surface of the multi-pole magnet 200 made of a skew magnet. With such a placement of the power generation sensor 100, the magnetic poles having different polarities can be opposed to the pair of axially-parallel portions 134. Thereby, the rotation detection device 10 having a small ring diameter and a small size is implemented.

### [Second example embodiment]

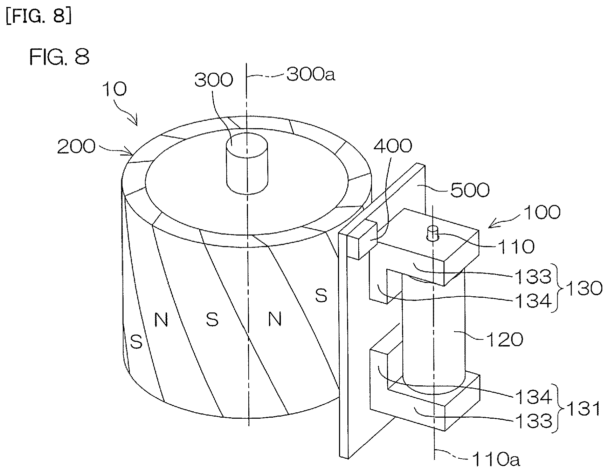

FIG. 8 illustrates a rotation detection device according to a second example embodiment. In addition to the rotation detection device 10 of the first example embodiment, in the second example embodiment, a magnetic sensor 400 is further included, the magnetic sensor 400 being configured to identify the magnetic pole of the multi-pole magnet 200 made of a skew magnet at a predetermined position in the circumferential direction around the rotation shaft 300. The magnetic sensor 400 may be configured with, for example, a hall IC. In this example embodiment, the power generation sensor 100 is mounted on a printed circuit board 500 (an example of a circuit board) placed to oppose the magnetic pole surface of the multi-pole magnet 200. Specifically, the power generation sensor 100 is mounted on a principal surface of the printed circuit board 500 opposite to the multi-pole magnet 200. Therefore, the printed circuit board 500 is interposed between the power generation sensor 100 and the multi-pole magnet 200, and the magnetic flux conducting pieces 130 and 131 of the power generation sensor 100 oppose the magnetic pole surface of the multi-pole magnet 200 through the printed circuit board 500. Further, in this example, the magnetic sensor 400 is mounted on the printed circuit board 500.

For example, in a case where the rotation shaft 300 rotates in the forward rotation direction, the magnetic sensor 400 is turned on when the power generation sensor 100 outputs a positive signal, and is turned off when the power generation sensor 100 outputs a negative signal. In addition, in a case where the rotation shaft 300 rotates in the reverse rotation direction, the magnetic sensor 400 is turned off when the power generation sensor 100 outputs a positive signal, and is turned on when the power generation sensor 100 outputs a negative signal. The relative placement of the power generation sensor 100, the multi-pole magnet 200, and the magnetic sensor 400 is designed such that the magnetic sensor 400 is in such an output state. Thereby, a rotation direction of the rotational motion can be detected by a combination of the output signal of the power generation sensor 100 and the output signal of the magnetic sensor 400. The combination of ON/OFF of the magnetic sensor 400 and the forward rotation and the reverse rotation of the rotation shaft 300 may be opposite to the above arrangement.

The magnetically-soft components included in the magnetic flux conducting pieces 130 and 131 are preferably formed of a magnetic material, which has a coercivity not higher than that of the magnetic wire 110 and has a higher relative magnetic permeability (for example, a relative magnetic permeability of not lower than 500). Specifically, preferred examples of the magnetic material include a Ni-ferrite-containing material and a Mn-ferrite-containing material. These materials have excellent characteristic properties such as low hysteresis, low self-dielectric property, and low iron loss. Therefore, these materials are advantageous in that the output characteristics are not influenced even in a case where a high-frequency alternating magnetic field generated when the magnetic field source is moved at a higher speed is applied to the power generation sensor 100.

Further, in a case where a width of a hole formed through the magnetic flux conducting piece 130 or 131, that is, the thickness W of the axially-orthogonal portion 133 (refer to FIG. 2A), is too large, a width of a space in which the coil 120 is placed is reduced, and this results in a decrease in pickup efficiency of the large Barkhausen effect of the magnetic wire 110. In a case where the width of the hole is too small, the magnetic path is narrower. Therefore, from experimental findings, the thickness W is preferably 10% to 20% of the entire length of the magnetic wire 110.

While the present invention has been described in detail by way of the example embodiments thereof, it should be understood that these example embodiments are merely illustrative of the technical principles of the present invention but not limitative of the invention. The scope of the present invention is to be limited only by the appended claims.

### DESCRIPTION OF REFERENCE CHARACTERS

- 10:: Rotation detection device
- 100:: Power generation sensor
- 110:: Magnetic wire
- 111:: First end portion
- 112:: Second end portion
- 113:: Axially-central position
- 120:: Coil
- 130:: Magnetic flux conducting piece
- 130a:: Wire placement portion
- 131:: Magnetic flux conducting piece
- 131a:: Wire placement portion
- 133:: Axially-orthogonal portion
- 134:: Axially-parallel portion
- 134a:: Adjacent end
- 134b:: Detection-region opposing surface
- 140:: Detection region
- 200:: Multi-pole magnet
- 210:: Magnet
- 220:: Magnet
- 230:: Magnet
- 240:: Multi-pole magnet
- 300:: Rotation shaft
- 400:: Magnetic sensor
- 500:: Printed circuit board
- D:: Distance
- L:: Distance
- t:: Width
- W:: Thickness
- g:: Distance
- x:: Axial direction
- y:: Width direction
- z:: Axially-orthogonal direction
- θ:: Inclination angle
- λ:: Magnetic-pole pitch

## Claims

1. A rotation detection device comprising:
a ring-shaped multi-pole magnet provided on a rotation shaft; and
a power generation sensor to detect a magnetic field which changes according to rotation of the multi-pole magnet; wherein
the power generation sensor includes:
a magnetic wire configured to exhibit a large Barkhausen effect,
a coil that is wound around the magnetic wire, and
a pair of magnetic flux conducting pieces that are made of magnetically-soft components respectively magnetically coupled to both end portions of the magnetic wire, the magnetic flux conducting pieces being provided to be symmetrical to each other with respect to a symmetry plane which is set at a central position in an axial direction of the magnetic wire;
the ring-shaped multi-pole magnet has a magnetization pattern on an outer circumferential portion, the magnetization pattern being inclined with respect to the rotation shaft; and
the power generation sensor faces the magnetization pattern of the multi-pole magnet in a posture in which the axial direction of the magnetic wire is parallel to the rotation shaft.

2. The rotation detection device according to claim 1, wherein
the pair of magnetic flux conducting pieces include:
a pair of axially-orthogonal portions to which the both end portions of the magnetic wire are respectively fixed and which extend parallel to each other from the both end portions of the magnetic wire in an axially-orthogonal direction orthogonal to the axial direction, and
a pair of axially-parallel portions which extend toward each other from distal end portions of the pair of axially-orthogonal portions along the axial direction and have adjacent ends opposing each other with a gap therebetween in the axial direction; and
the pair of axially-parallel portions face the magnetization pattern of the multi-pole magnet.

3. The rotation detection device according to claim 2, wherein
a distance of the gap in the axial direction is set to 5% to 50% of a distance in the axial direction between the pair of axially-orthogonal portions at coupling positions between the magnetic wire and the pair of axially-orthogonal portions.

4. The rotation detection device according to any one of claims 1 to 3, wherein
the magnetization pattern includes a plurality of magnetic poles which are arranged in a circumferential direction around the rotation shaft and are formed in a band shape inclined with respect to the rotation shaft, and the plurality of magnetic poles include N poles and S poles which are alternately arranged in the circumferential direction.

5. The rotation detection device according to claim 4, wherein
when one end portion of the both end portions of the magnetic wire of the power generation sensor opposes one N pole of the N poles, an inclination angle of the plurality of magnetic poles with respect to the rotation shaft is determined such that the other end portion of the both end portions of the magnetic wire opposes one S pole of the S poles that is adjacent to the one N pole.

6. The rotation detection device according to claim 4, wherein
when one of the pair of magnetic flux conducting pieces of the power generation sensor faces one N pole of the N poles, an inclination angle of the plurality of magnetic poles with respect to the rotation shaft is determined such that the other of the pair of magnetic flux conducting pieces faces one S pole of the S poles that is adjacent to the one N pole.

7. The rotation detection device according to any one of claims 1 to 6, further comprising a magnetic sensor to identify a magnetic pole of the ring-shaped multi-pole magnet at a predetermined position in a circumferential direction around the rotation shaft.

8. The rotation detection device according to any one of claims 1 to 7, further comprising:
a circuit board that is placed between the power generation sensor and the multi-pole magnet, wherein
the power generation sensor is mounted on a principal surface of the circuit board opposite to the multi-pole magnet.
